(19)

Europäisches
Patentamt
European
Patent Office
Office européen
des brevets

(11) **EP 1 382 922 B1**

(12) **EUROPEAN PATENT SPECIFICATION**

(45) Date of publication and mention
of the grant of the patent:
**14.02.2007 Bulletin 2007/07**

(51) Int Cl.:
*F25B 41/06* (2006.01)    *G05D 7/06* (2006.01)
*F16K 31/06* (2006.01)

(21) Application number: **03015982.6**

(22) Date of filing: **14.07.2003**

(54) **Constant flow rate expansion valve**

Entspannungsventil mit konstantem Durchfluss

Vanne de détente à débit constant

(84) Designated Contracting States:
**DE FR IT**

(30) Priority: **16.07.2002 JP 2002206596**
           **28.01.2003 JP 2003018455**

(43) Date of publication of application:
**21.01.2004 Bulletin 2004/04**

(73) Proprietor: **TGK CO., Ltd.**
**Hachioji-shi,**
**Tokyo 193-0942 (JP)**

(72) Inventor: **Hirota, Hisatoshi**
**Hachioji-shi**
**Tokyo 193-0942 (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**US-A- 5 117 647**      **US-A1- 2002 053 652**

• **PATENT ABSTRACTS OF JAPAN vol. 2000, no.**
**23, 10 February 2001 (2001-02-10) & JP 2001**
**153495 A (TGK CO LTD), 8 June 2001 (2001-06-08)**

## Description

This invention relates to an expansion valve for controlling a constant flow rate according to the preamble of claim 1, particularly for a refrigeration cycle of an automotive air conditioner, for changing high-temperature and high-pressure refrigerant into low-temperature and low-pressure refrigerant and to deliver the resulting refrigerant to an evaporator at a constant flow rate.

In a refrigeration cycle of an automotive air conditioner, when a differential pressure control valve for providing control such that the differential pressure across a compressor or the suction pressure is constant is used for controlling the compressor, to stabilize controllability of the system, it is desirable to use a constant flow rate expansion valve different in control method, as e.g. known from JP-A-2001-153495.

The known expansion valve includes a constant flow rate mechanism functioning based on a principle that if the cross-sectional area of a passage through which refrigerant flows between an inlet and an outlet, and a differential pressure across the passage are determined, it is possible to achieve a constant flow rate through the expansion valve, and to control the constant flow rate corresponding to a value set by a solenoid by varying one of the cross-sectional area and the differential pressure by the solenoid. The constant flow rate mechanism includes a cross-sectional area control valve for controlling the cross-sectional area of a passage, and a constant differential pressure valve for making constant the differential pressure between the inlet and outlet of the cross-sectional area control valve, and controls the cross-sectional area of the cross-sectional area control valve by a solenoid, to thereby hold the flow rate of refrigerant flowing through the expansion valve at a predetermined constant flow rate corresponding to the cross-sectional area set by the solenoid (Fig. 1 JP-A-2001-153495). Alternatively, the constant flow rate mechanism includes a restriction passage of a fixed cross-sectional area, and a differential pressure control valve for making constant the differential pressure between the inlet and outlet of the restriction passage, and controls the differential pressure set to the differential pressure control valve by a solenoid, to thereby maintain a predetermined constant flow rate through the expansion valve corresponding to the differential pressure set by the solenoid (Fig. 2 of JP-A-2001-153495).

In the known expansion valve, however, the mode of controlling the cross-sectional area is such that a pressure-sensing section of the constant differential pressure valve slides between the inlet and the outlet to open and close the constant differential pressure valve by sensing an intermediate pressure between the constant differential pressure valve and the cross-sectional area control valve, and by sensing a pressure at the outlet. Further, the mode of controlling the differential pressure is such that a pressure-sensing section of the differential pressure control valve slides between the inlet and the outlet to open and close the differential pressure control valve, by sensing an intermediate pressure between the differential pressure control valve and the restriction passage, and by sensing a pressure at the outlet. Therefore, in both modes, there occurs leakage through respective sliding portions from the inlet to the outlet, and it is difficult, for example, to control the flow rate substantially to zero, even if the control of the flow rate to zero is attempted.

It is an object of the present invention to provide a constant flow rate expansion valve operating with sufficiently reduced leakage losses.

The above object is achieved by the features of claim 1.

Since the diaphragm is disposed at a portion of the differential pressure control valve where the inlet pressure is received, it is possible to completely prevent leakage through the differential pressure control valve.

The diaphragm blocks a necessary gap or clearance at a sliding portion of the differential pressure control valve and completely prevents leakage via the sliding portion, so that leakage of refrigerant is reduced to an amount depending on a degree of gastightness between the valve element and the valve seat of the fully closed differential pressure control valve. The valve element of the differential pressure control valve may be formed by two component parts When the flow rate is controlled, while operating the two valve elements in unison to vary the flow path cross-sectional area of the restriction for generating a differential pressure, the differential pressure across the restriction is made constant. After one of the valve elements has fully closed the differential pressure control valve, the other valve element, which may be an elastic member, is further urged to fully close also the restriction. Since the flow path cross-sectional area of the restriction is made variable, the mass flow rate of refrigerant passing through the restriction is stabilized, which makes the constant flow rate expansion valve unsusceptible to changes in the pressure of a refrigerant inlet, thereby making it possible to enhance controllability of the expansion valve. Further, since the restriction is completely blocked when it is fully closed, leakage of refrigerant can be completely prevented to thereby enhance quality of the expansion valve. In some embodiments gastight seals may be provided for the portion connecting the fixed core and the main block, and so forth, by welding, without using sealing members, such as O rings and gaskets. Therefore, the constant flow rate expansion valve is by far enhanced in pressure resistance. This eliminates the need for a complicated construction, such as that of a pilot-operated expansion valve, not only when the valve is used in a refrigeration cycle using fluorohydrocarbon refrigerant (HFC-134a, HFC-152a) but also when it is used in a refrigeration cycle using carbon dioxide having a very high operating pressure.

Embodiments of the invention will be described with reference to the drawings. In the drawings is:

Fig. 1    a central longitudinal cross-section view of a first embodiment of the expansion valve,

Fig. 2    a diagram of flow rate characteristics of the first embodiment,

Fig. 3    a longitudinal cross-section of a second embodiment of the expansion valve,

Fig. 4    a longitudinal cross-section of a third embodiment of the expansion valve,

Fig. 5    a diagram of flow rate characteristics of the third embodiment,

Fig. 6    a longitudinal cross-section of a fourth embodiment of the expansion valve,

Fig. 7    a diagram of flow rate characteristics of the fourth embodiment,

Fig. 8    a longitudinal cross-section of a fifth embodiment of the expansion valve,

Fig. 9    a longitudinal cross-section of a sixth embodiment of the expansion valve,

Fig. 10    a longitudinal cross-section of a seventh embodiment of the expansion valve in de-energized state,

Fig. 11    a longitudinal cross-section of the seventh embodiment of the expansion valve in energized state.

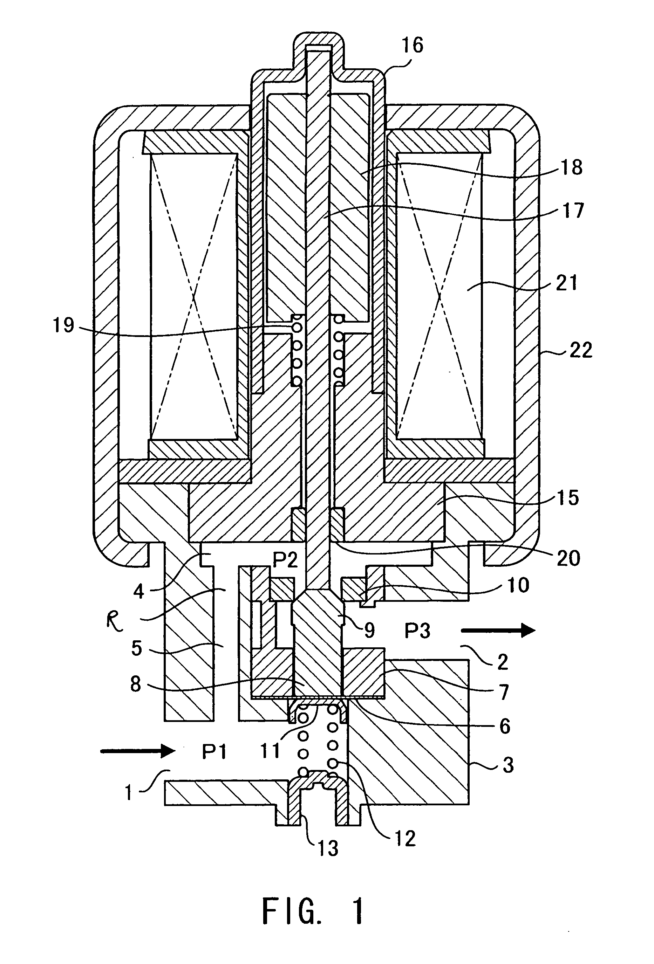

In a constant flow rate expansion valve in Fig. 1, an inlet 1 into which high-pressure refrigerant is sent, and an outlet 2 from which the refrigerant is sent out to an evaporator are provided in a main block 3. Between the inlet 1 and an intermediate chamber or space 4 extends a refrigerant passage 5 of smaller cross-sectional area than that of the inlet 1 to form a restriction (R) (orifice) for generating a differential pressure dependent on the flow rate thereacross.

The main block 3 has an axial through hole formed with a stepped portion. A diaphragm 6 is disposed at the stepped portion in a large-diameter part of the through hole. A valve holder 7 is press-fit into the large-diameter part to fix the diaphragm 6. The valve holder 7 contains an axially movable piston 8 integrally formed with a valve element 9 having a frustoconical seating surface on the top. In an upper opening of the valve holder 7, a valve seat 10 associated with the valve element 9 is fixedly disposed by press-fitting. The valve seat 10 has a valve hole with an inner diameter identical to the outer diameter of the piston 8, whereby pressure of the refrigerant outlet 2 applied onto the diaphragm 6, the piston 8, and the valve element 9 does not adversely affect the motions of the piston 8 and the valve element 9. Where the piston 8 and the valve element 9 move forward and backward responding to a differential pressure between the inlet 1 and the outlet 2, the diaphragm 6 completely free from leakage seals the inlet 1 and the outlet 2 from each other.

The diaphragm 6 has an underside surface in abutment with a diaphragm-receiving disc 11. The valve element 9 is urged by a spring 12 in a direction to be seated on the valve seat 10. The lower spring end is retained by a member 13 press-fit into the main block 3 from below.

Preferably, a polyimide film of high tensile strength and having a thickness of approximately 75 $\mu$m, forms the diaphragm 6. Instead, a plurality of even thinner polyimide films overlaid upon each other may be used to improve the tensile strength without increasing the rigidity.

On top of the main block 3 a solenoid section is provided. A fixed core 15 is fitted in the upper portion of the main block 3. After fitting the fixed core 15 a sealing is provided by welding for preventing leakage. The top of the fixed core 15 is capped with a casing 16, and the capped portion as well is sealed by welding such that the inside of the solenoid section becomes completely gastight. The casing 16 includes an axial shaft 17, a movable core 18 fixed to the shaft 17, and a spring 19 disposed between the movable core 18 and the fixed core 15. The shaft 17 is axially movably held by a bearing formed at an upper end portion of the casing 16 and a bearing 20 press-fit into a lower end face of the fixed core 15. A solenoid coil 21 is arranged around the upper portion of the fixed core 15 and the casing 16, and is fixed to the main block 3 by a yoke 22.

When the solenoid coil 21 is not energized, the movable core 18 is separated by the spring 19 from the fixed core 15. No solenoid force is applied to the valve element 9. Since the piston 8 is urged by the spring 12, the valve element 9 is seated on the valve seat 10 (fully-closed state).

When an electric current i is supplied to the solenoid coil 21, the movable core 18 is attracted toward the fixed core 15. A solenoid force corresponding to the attraction force is applied via the shaft 17 to the valve element 9. The valve element 9 is brought into a stationary position with the solenoid force and the load of the spring 12 being balanced. High-pressure refrigerant from the inlet 1 passes through the refrigerant passage 5 forming the restriction (R), and enters the intermediate chamber 4, and flows into the refrigerant outlet 2 while being adiabatically expanded through a gap formed between the valve element 9 and the valve seat 10.

The pressure in the inlet 1 is P1, the pressure in the intermediate chamber 4, as reduced by the refrigerant passage 5, is P2, and the cross-sectional area of the refrigerant passage 5 is represented by A. Then, the flow rate Gf through the expansion valve is represented by the following equation:

$$Gf = KA (P1 - P2) \quad \ldots (1)$$

K represents a flow coefficient of the refrigerant.

The effective pressure-receiving area of the diaphragm 6, the piston 8, and the valve element 9 is B, the solenoid force produced by the electric current i is f (i), and the load of the spring 12 is fs. The relationship between forces acting on the piston 8 and the valve element 9 in upward and downward directions is represented by the following equation:

$$B \cdot P1 + fs = B \cdot P2 + f(i) \quad \ldots (2)$$

From this equation (2), the force applied to the valve element 9 is represented by the following equation:

$$B (P1 - P2) = f(i) - fs \quad \ldots (3)$$

From the equations (1) and (3), the flow rate Gf is represented by the following equation:

$$Gf = K (A/B) (f(i) - fs) \quad \ldots (4)$$

This means that on the right side of the equation (4), parameters other than the solenoid force f(i) are fixed values, and hence the flow rate Gf becomes a constant flow rate proportional to the electric current i.

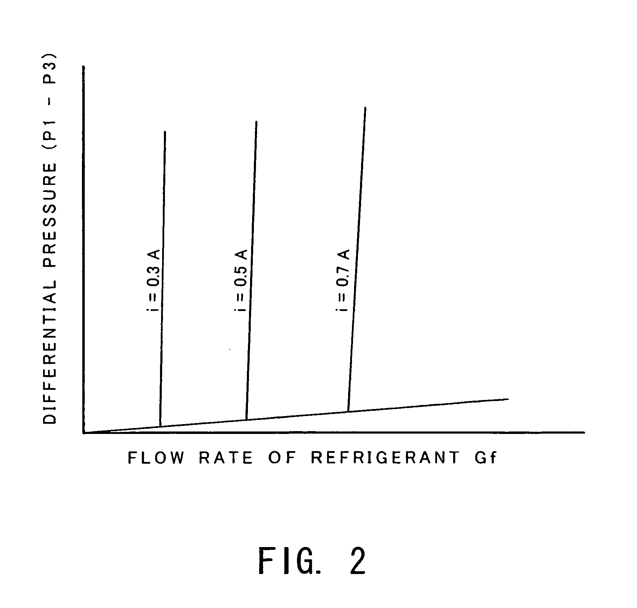

In the flow rate characteristics of Fig. 2, the abscissa represents the flow rate, and the ordinate represents the differential pressure between the pressure P1 at the inlet 1 and the pressure P3 at the outlet 2. Without electric current i supplied to the solenoid coil 21, the valve element 9 is seated on the valve seat 10 by the load fs of the spring 12. Then the flow rate Gf is zero.

When e.g. 0.3 ampere as the electric current i is supplied to the solenoid coil 21, to generate a solenoid force f(i) larger than the load fs of the spring 12, the valve element 9 is instantly moved from the seating position to a position where the solenoid force f(i) and the load of the spring 12 are balanced, and remains stationary then. Refrigerant starts to flow and generates a differential pressure (P1 - P2) across the refrigerant passage 5. The differential pressure (P1 - P2) is applied to the diaphragm 6 and the valve element 9 in opposite directions. The differential pressure increases as the flow rate increases. When the flow rate progressively increases to a certain flow rate, and attempts to exceed this certain flow rate, the differential pressure (P1 - P2) acts on the diaphragm 6 and the valve element 9 to urge the valve element 9 toward the valve seat 10, that is, in a direction of reducing the flow rate of the refrigerant. Inversely, when the flow rate becomes smaller than the certain flow rate, the differential pressure (P1 - P2) also decreases, so that the differential pressure (P1 - P2) acts on the valve element 9 to urge the same in the valve-opening direction to increase the flow rate. The expansion valve controls a constant flow rate dependent on the supplied electric current i.

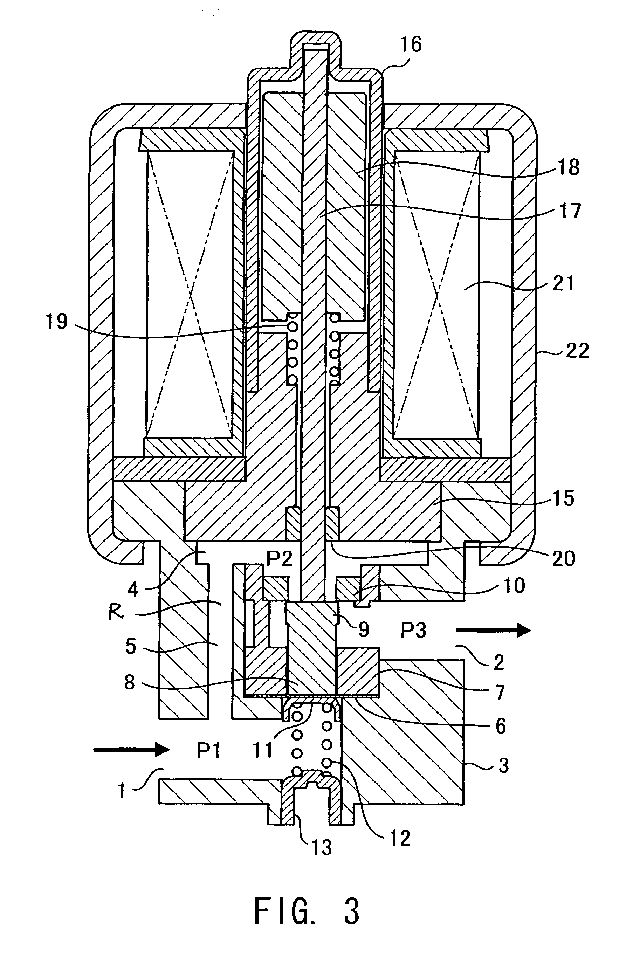

The expansion valve of the second embodiment in Fig. 3 has a flat valve configuration, i.e. the valve element 9 has a flat seating surface.

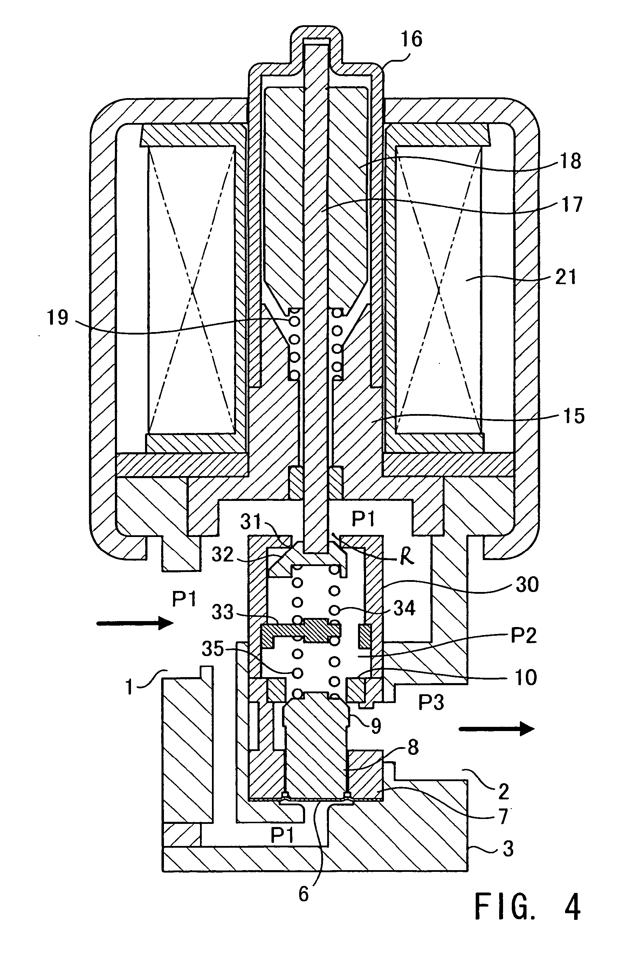

The expansion valve according to the third embodiment of Fig. 4 is distinguished from the first and second embodiments by a constant flow rate mechanism which changes the flow path cross-sectional area in dependence on the value of the electric current i, to control the constant differential pressure across the expansion valve.

A valve housing 30 fixed in a space above the valve seat 10 has a central top opening forming a valve hole, and an inside valve seat 31. A cross-sectional area control valve element 32 is disposed inside the housing 30 opposed downstream to the valve seat 31 to define the restriction R the cross-sectional area of which is variable. The valve housing 30 contains a partition wall 33 having a refrigerant passage hole. Between the valve element 32 and the partition wall 33 is disposed a spring 34 urging the valve element 32 towards the valve seat 31. The shaft 17 of the solenoid section extends through the top opening of the valve housing 30. The lower end of the shaft 17 is loosely inserted into the valve element 32. Without electric current the movable core 18 and the shaft 17 are pulled by the spring 19. The valve element 32 is disconnected from the solenoid section, in a fully-closed state seated on valve seat 31.

A spring 35 between the partition wall 33 and the valve element 9 urges the valve element 9 in a direction away from the valve seat 10. Without electric current, the valve element 9 is moved away from valve seat 10 by the spring 35. The valve for carrying out throttle expansion is in fully-opened state.

The effective pressure-receiving area of the valve element 32 is A. The load set to the spring 34 is f1. The effective pressure-receiving area of the valve element 9 and the diaphragm 6 is B. The load set to the spring 35 is f2. When a certain electric current i is supplied to apply the solenoid force f(i) to the valve element 32, refrigerant flows at a certain flow rate. Pressure P1 is applied to the upstream side of the valve element 32 and the diaphragm 6. The intermediate pressure within the valve housing 30 is P2. Therefore, the force at the valve element 32 is represented by the following equation:

$$A \cdot P1 + f(i) = A \cdot P2 + f1 \quad \ldots (5)$$

From this equation (5), there is obtained the following equation:

$$P1 - P2 = (f1 - f(i))/A \quad \ldots (6)$$

The force relationship on the valve element 9 also is represented by the following equation:

$$B \cdot P1 = B \cdot P2 + f2 \quad \ldots (7)$$

From this equation (7), there is obtained the following equation:

$$P1 - P2 = f2/B \quad \ldots (8)$$

Consequently, from the equation (6) and the equation (8), there is obtained the following relationship:

$$(f1 - f(i))/A = f2/B \quad \ldots (9)$$

This equation (9) holds when a certain electric current i is supplied to the solenoid coil 21, thereby causing refrigerant to flow. It is desired that the constant flow rate expansion valve is fully closed when the electric current ceases, and hence in order to fully close the valve when the electric current i is reduced to zero, the expansion valve is designed such that the effective pressure-receiving area A of the valve element 32, the load f1 set to the spring 34, the effective pressure-receiving area B of the valve element 9 and the diaphragm 6, and the load f2 set to the spring 35 satisfy the following condition:

$$f1/A > f2/B \quad \ldots (10)$$

When the electric current i is reduced to zero, the differential pressure required for lifting the valve element 32 can be made larger than a pressure required for closing the valve element 9, so that it is possible to fully seated the valve element 32 among the valve element 32 and the valve element 9, to which the same differential pressure (P1 - P2) is applied.

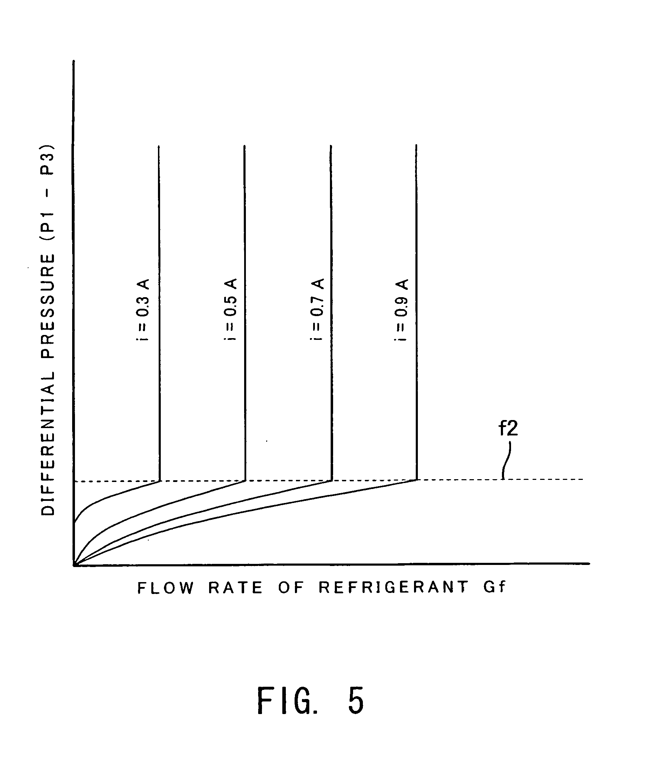

In the flow rate characteristics of Fig. 5 of the third embodiment, the abscissa represents the flow rate, and the ordinate represents the differential pressure between the pressure P1 at the inlet 1 and the pressure P3 at the outlet 2. Without electric current the valve element 32 is seated on the valve seat 31 by the load f1 of the spring 34 to fully close the expansion valve. The flow rate Gf is zero.

When e.g. 0.3 ampere of electric current i is supplied to the solenoid coil 21, to apply a solenoid force f(i) larger than the load f1 of the spring 34 to the valve element 32, the valve element 32 is instantly moved from a seated position to a position where the solenoid force f(i) and the load f1 of the spring 12 are balanced, and is maintained stationary then. Refrigerant starts to flow. First, as the flow rate increases, the differential pressure between the pressure P1 at the inlet 1 and the pressure P3 at the outlet 2 also progressively increases. The flow generates a differential pressure (P1 - P2) across the valve element 32.

The differential pressure (P1 - P2) is applied to the diaphragm 6 and the valve element 9 and presses them against each other. The differential pressure increases as the flow rate increases. When the flow rate continues to increase progressively, the differential pressure (P1 - P2) reaches a broken line f2, in Fig. 5. Then, the expansion valve starts constant flow rate control. The broken line f2 represents the load f2 set to the spring 35. More specifically, the diaphragm 6 and the valve element 9 sense the pressures P1, P2. When the differential pressure (P1 - P2) attempts to increase, the valve element 9 moves in valve-closing direction. When the differential pressure (P1 - P2) attempts to decrease, the valve element 9 moves in the valve-opening direction. Hence, the expansion valve provides control such that the differential pressure (P1 - P2) is made constant. The expansion valve causes a flow at a fixed flow rate set depending on the electric current i, when the flow rate becomes equal to or higher than a certain value.

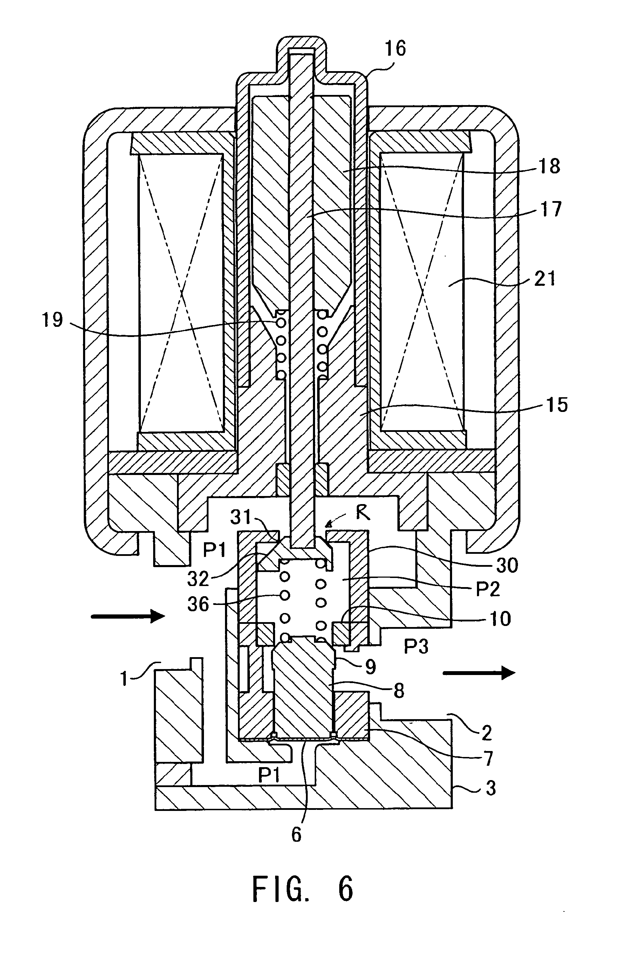

Similar to the third embodiment, the fourth embodiment in Fig. 6 has a constant flow rate mechanism which varies cross-sectional area of the refrigerant passage depending on the value of the electric current i to control a constant differential pressure across the expansion valve.

The expansion valve of Fig. 6 has a valve housing 30 and a spring 36 between the valve element 32 and the valve element 9. The spring 36 causes the valve element 32 to be seated on the valve seat 31, and at the same time urges the valve element 9 in a direction away from the valve seat 10.

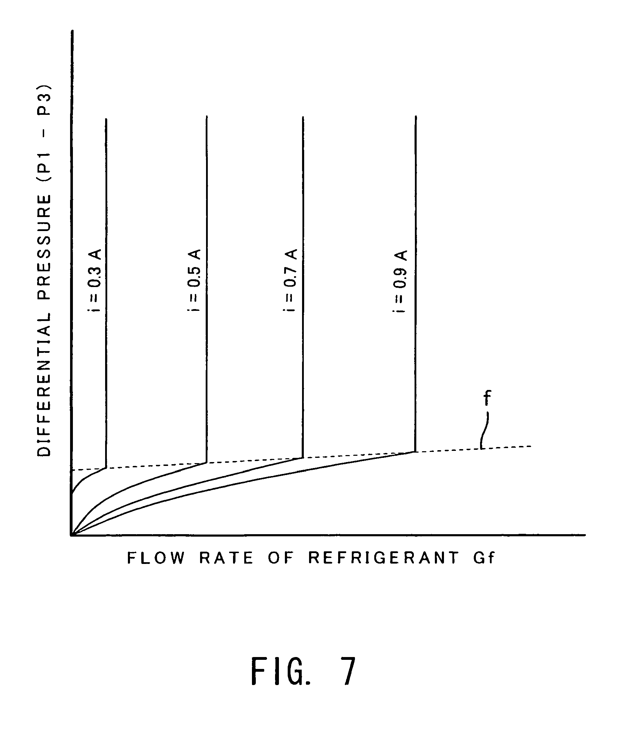

The flow path cross-sectional area is set depending on the value of the electric current i supplied to the solenoid coil 21. The differential pressure (P1 - P2) across the expansion valve is controlled by the valve element 9, the piston 8, and the diaphragm 6, such that the differential pressure (P1 - P2) becomes constant, thereby controlling a constant flow rate. In this embodiment, however, the load f of the spring 36 is changed with a change of the axial position of the valve element 32 which moves according to the value of the electric current i. The expansion valve has the flow rate characteristics illustrated in Fig. 7. A broken line f in Fig. 7 plot positions where the constant flow rate expansion valve starts constant flow rate control. The line slightly rises from left to right. This is because as the electric current i supplied to the solenoid coil 21 is increased, the amount of compression of the spring 36 by the valve element 32 increases to increase the load f.

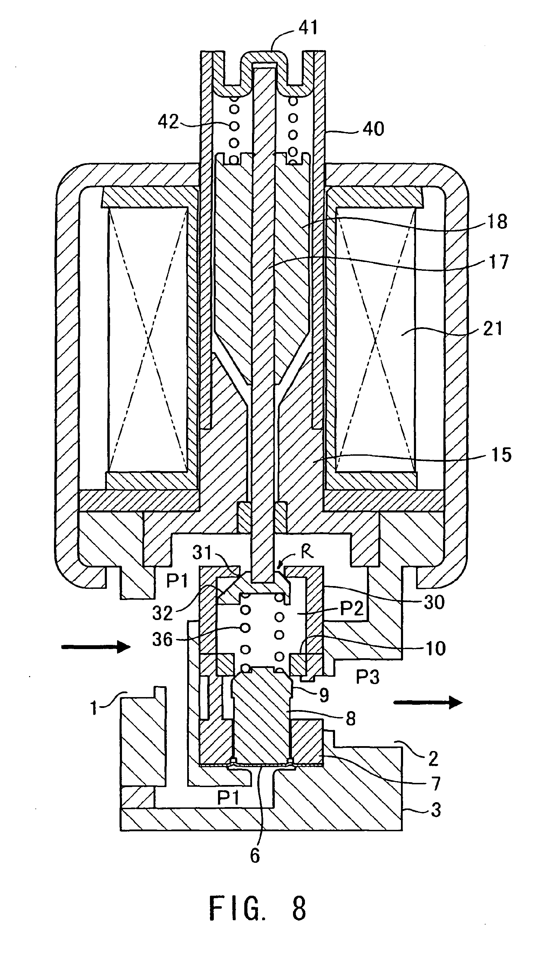

The expansion valve according to the fifth embodiment in Fig. 8 has the same valve section as the fourth embodiment, but the solenoid section is modified such that the load of the spring 36 can be adjusted.

A sleeve 40 is fitted and welded into an upper portion of the fixed core 15. An upper opening of the sleeve 40 contains a member 41 press-fit therein which also forms a bearing for the shaft 17. Between the member 41 and the movable core 18 a spring 42 is provided in a manner opposed to the spring 36 between the valve element 32 and the valve element 9. Therefore, by adjusting the insertion depth of the member 41 into the sleeve 40, the load of the spring 42 is adjusted such that it is possible to adjust the load of the spring 36, and to adjust the value of the differential pressure at which the expansion valve starts constant flow rate control.

The press-fit member 41, after the insertion depth has been adjusted accordingly, is welded to the sleeve 40 to provide a gastight seal for the inside of the solenoid section. Similarly, gastight seals by welding are also provided for a portion connecting the sleeve 40 and the fixed core 15, and a portion connecting the fixed core 15 and the main block 3.

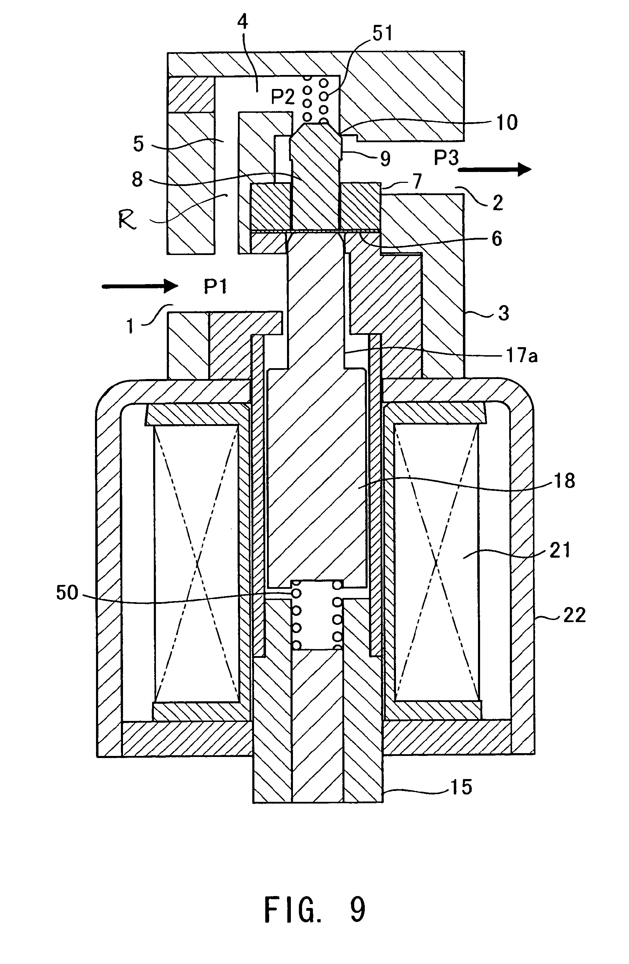

Similar to the first and second embodiments, the expansion valve according to the sixth embodiment in Fig. 9 has a constant flow rate mechanism which includes the refrigerant passage 5 defining the restriction R. However, the solenoid for setting the differential pressure is disposed on the opposite side compared to the first and second embodiments.

More specifically, the solenoid is disposed on the side where the diaphragm 6 receives the pressure P1 from the inlet 1. The solenoid has the movable core 18, a spring 50, and the fixed core 15 arranged in the mentioned order from the side of the diaphragm 6. Further, a spring 51 is provided on top of the valve element 9 for urging the valve element 9 downward. The urging force of the spring 51 is smaller than that of the spring 50.

Without electric current the spring 50 urges the piston 8, the valve element 9 and the diaphragm 6 via a shaft 17a integrally formed with the movable core 18 to seat the valve element 9 on the valve seat 10 to fully close the expansion valve.

If electric current i is supplied to the solenoid coil 21, the movable core 18 is attracted toward the fixed core 15. The urging force of the spring 50 is reduced. The shaft 17a is withdrawn to a position where the attractive force of the solenoid and the load of the spring 50 are balanced, and remains stationary then. The valve element 9 moves away from the valve seat 10 by the amount of withdrawal of the shaft 17a. Now, since the urging force of the spring 51 is applied in a direction opposite to the direction of application of the urging force of the spring 50, it is possible to move the valve element 9 away from the valve seat 10 with a smaller amount of electric current i.

In this state, high-pressure refrigerant from the inlet 1 enters the intermediate chamber 4 through the refrigerant passage 5, and pushes open the valve element 9 to flow out to the outlet 2. Then, after the flow rate increases to reach a predetermined flow rate, and if the flow rate attempts to increase further, the differential pressure (P1 - P2) is increased to move the valve element 9 in the valve-closing direction. When the flow rate becomes lower than the predetermined flow rate, the differential pressure (P1 - P2) is decreased to move the valve element 9 in the valve-opening direction. Thus, the expansion valve is maintained such that it controls a constant flow rate set depending on the electric current i.

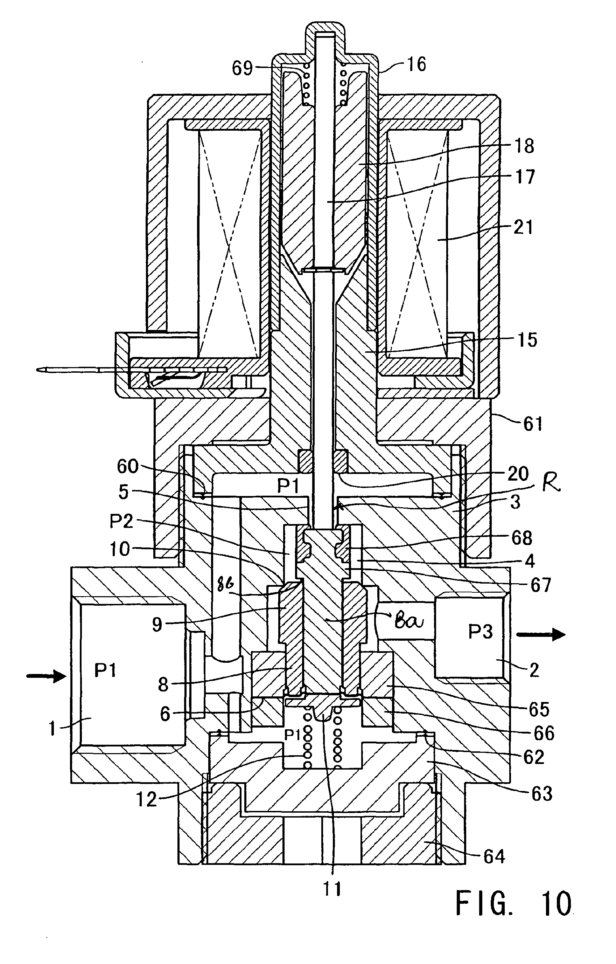

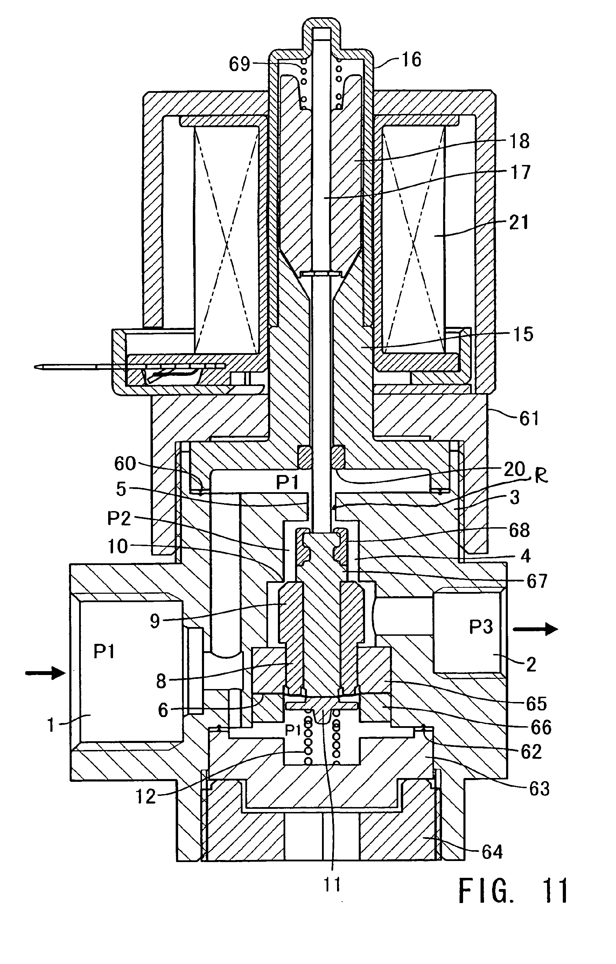

Although the expansion valve according to the seventh embodiment in Figs 10 and 11 is similar to the first embodiment it is distinguished from the first embodiment in that the cross-sectional area of the refrigerant passage 5 is varied according to the pressure at the inlet 1. The refrigerant passage 5 is completely closed when the solenoid is de-energized, thereby fully closing the expansion valve.

The refrigerant passage 5 is formed in Figs 10 and 11 through the center of the top of the main block 3. The shaft 17 of the solenoid extends through the refrigerant passage 5, with a radial gap between an inner wall of the refrigerant passage 5 and the shaft 17. This forms the restriction R having a smaller cross-sectional area than the inlet 1. The fixed core 15 is disposed on the top of the main block 3 via a gasket 60 to form a chamber communicating with the inlet 1 (pressure P1). The fixed core 15 is fixed by a flange 61 screwed on the main block 3. A plug 63 is provided in a lower portion of the main block 3 via a gasket 62 to form a chamber communicating with the inlet 1 ( pressure P1). The plug 63 is fixed to the main block 3 by a stopper 64 screwed into the main block 3.

The main block 3 has the diaphragm 6 disposed therein for sealing between the inlet 1 and the outlet 2. Annular holders 65, 66 press-fit therein serve to fix the periphery of the diaphragm 6 by a sandwiching action. This completely prevents internal leakage between the inlet 1 and the outlet 2. In the holder 66 on the underside of the diaphragm 6 is disposed the diaphragm-receiving disc 11 such that only a central portion of the diaphragm-receiving disc 11, and makes a central portion of the diaphragm 6 is urged by the spring 12.

The piston 8 and the integral valve element 9 have an axial through hole for axially movably holding a piston 8a. The piston 8a consists of a cylindrical guide portion having the same axial length as the piston 8 and the valve element 9, and of a valve element portion 67 having a larger diameter than the guide portion. The shaft 17 is in abutment with the top surface of the valve element portion 67. When receiving a solenoid force from the shaft 17, a stepped portion 8b formed at a boundary between the guide portion and the valve element portion 67 of the piston 8a is caught by the valve element 9 to cause the piston 8a, the piston 8, and the valve element 9 to operate in unison. When the piston 8a, the piston 8, and the valve element 9 operate in unison in valve-closing direction, first, the valve element 9 is seated on the valve seat 10, and then the protruding surface portion of the diaphragm-receiving disc 11 further presses the central portion of the diaphragm 6 by the urging force of the spring 12, whereby only the piston 8a is moved toward the refrigerant passage 5. The valve element portion 67 is covered with a valve sheet 68 except for a part of contacted by the shaft 17. The valve sheet 68 is made of an elastic member, such as a rubber part.

The solenoid has a spring 69 disposed the movable core 18 and the casing 16. The spring 69 prevents uncontrolled motions of the movable core 18 within the casing 16 due to external vibrations.

Without electric current in Fig. 10 the spring 69 urges the shaft 17 downward, with small load, while the spring 12 urges the piston 8 and the valve element 9 upward with large load via the diaphragm-receiving disc 11 and the diaphragm 6. The valve element 9 is seated on the valve seat 10. The diaphragm-receiving disc 11 urge the piston 8a via the diaphragm 6 by the central surface protruding portion, whereby the piston 8a is further pushed upward to bring the valve sheet 68 into intimate contact with an outlet-side opening of the refrigerant passage 5. In case that the valve-closing capability conventionally is influenced by machining accuracy between the contacting metal members of the element 9 and the valve seat 10 the refrigerant passage 5 additionally is closed by the elastic valve sheet 68. This allows to maintain a substantially completely and reliable closed state of the valve.

Since it then is possible to maintain a completely closed state of the valve, any piping between the condenser and the evaporator can be blocked. Therefore, even when the expansion valve is applied to a refrigeration cycle which uses, as refrigerant, HFC-152a, which is combustible, among fluorohydrocarbon refrigerants, or carbon dioxide having a very high operating pressure, and there occurs an accident, such as a breakage of an evaporator provided in a vehicle compartment during stoppage of operation of an automotive air conditioner, the refrigerant within the refrigeration cycle is prevented from leaking via the evaporator into the vehicle compartment. Occurrence of a fire and suffocation due to oxygen deficiency, which can seriously injure occupants, can be prevented. In this case, if a check valve is provided on an outlet side of the evaporator, and the automotive air conditioner is operated such that when the operation of the air conditioner is stopped, the constant flow rate expansion valve is fully closed, and then a compressor is continuously operated to suck refrigerant from the evaporator, whereafter the compressor is stopped, it is possible to collect the refrigerant from the evaporator, thereby making it possible to further completely prevent leakage of refrigerant into the vehicle compartment.

When in Fig. 11 the electric current i is supplied, the movable core 18 is attracted by the fixed core 15. A corresponding solenoid force is applied to the piston 8a to push the piston 8a downward to open the refrigerant passage 5 first. After that, since the stepped portion 8b is caught by the valve element 9, the piston 8a moves downward against the load of the spring 12, in unison with the valve element 9 and the piston 8, and the valve element 9 remains stationary in a position where the solenoid force and the load of the spring 12 are balanced. In this state, high-pressure refrigerant from the inlet 1 is reduced in pressure while passing through the refrigerant passage 5 (the restriction R), and enters the intermediate chamber 4 while having the intermediate pressure P2. From the intermediate chamber 4, the refrigerant flows into the outlet 2 while being adiabatically expanded through the gap formed between the valve element 9 and the valve seat 10. By the flow a differential pressure (P1 - P2) is generated across the refrigerant passage 5. This differential pressure (P1 - P2) increases as the flow rate increases. When the flow rate of the refrigerant attempts to exceed a certain flow rate set by the solenoid, the differential pressure (P1 - P2) increases to cause the diaphragm 6 to urge the valve element 9 toward the valve seat 10 in the direction of reducing the flow rate of the refrigerant. Inversely, when the flow rate becomes smaller than the certain flow rate, the differential pressure (P1 - P2) is also made smaller, so that the differential pressure (P1 - P2) acts on the valve element 9 to urge the same in the valve-opening direction to increase the flow rate. The expansion valve controls a constant flow rate set according to the supplied electric current i.

When the valve element 9 controls the flow rate such that the differential pressure (P1 - P2) across the refrigerant passage 5 is held constant, the piston 8a extending from the valve element 9 to a location close to the outlet of the refrigerant passage 5 also is moved in unison with the valve element 9, thereby varying the cross-sectional area of the refrigerant passage 5. This narrows the cross-sectional area when the pressure P1 at the inlet 1 increases, and widen the area when the pressure P1 decreases. Therefore, although the density of the refrigerant is increased by an increase in the pressure P1 at the inlet 1, the cross-sectional area of the refrigerant passage 5 is narrowed to reduce the volumetric flow rate, so that the piston 8a acts to hold constant the mass flow rate passing through the refrigerant passage 5. Inversely, when the pressure P1 at the refrigerant inlet 1 decreases, the volumetric flow rate is increased so as not to change the mass flow rate. As a result, even if the pressure P1 at the refrigerant inlet 1 is changed, the mass flow rate remains unchanged. Therefore, the expansion valve is unsusceptible to changes of the pressure at the refrigerant inlet 1 and is excellent in controllability.

**Claims**

1. Expansion valve for controlling a constant flow rate including a restriction (R) having a flow path cross-sectional area smaller than that of a refrigerant inlet (1), and a differential pressure control valve (9, 10) for providing control such that a differential pressure across the restriction is constant, **characterized in that** a downstream side of the restriction (R) and an upstream side of the differential pressure control valve (9, 10) are communicated with each other, and
that the differential pressure control valve (9, 10) is configured to receive an inlet (1) pressure of the refrigerant inlet in a valve-closing direction and at the same time receive an intermediate pressure (P2) between the restriction (R) and the differential pressure control valve (9, 10) in a valve-opening direction, with a pressure-receiving portion for receiving the inlet pressure being fluidly isolated by a diaphragm (6).

2. Expansion valve according to claim 1, **characterized in that** the differential pressure control valve (9, 10) includes a valve seat (10) disposed at an intermediate portion of a passage leading from a space between the restriction (R) and the differential pressure control valve to a refrigerant outlet (2), a valve element (9) disposed in a manner opposed to the valve seat (10) from a side of the refrigerant outlet (2) such that the valve element can move to and away from the valve seat, and a piston (8) integrally formed with the valve element (9), and that the diaphragm (6) is provided on an opposite end face of the piston (8) to the valve element (9), in abutment with the end face.

3. Expansion valve according to claim 2, **characterized in that** an inner diameter of the valve seat (10) and an effective pressure-receiving area of the diaphragm (6) have the same size.

4. Expansion valve according to claim 2, **characterized in that** the diaphragm (6) is gastightly sandwiched between a holder (7) axially movably supporting the piston (8), and a main block (3) having the holder fitted therein.

5. Expansion valve according to claim 1, **characterized in that** the diaphragm (6) is formed by a plurality of thin films overlaid upon each other.

6. Expansion valve according to claim 1, **characterized in that** the restriction (R) is a refrigerant passage (5) having a fixed flow path cross-sectional area, and
that the differential pressure control valve (9, 10) is configured such that a side of the differential pressure control valve where the inlet pressure is received is urged by a spring (12) via the diaphragm (6) in the valve-closing direction, and a side of the differential pressure control valve where the intermediate pressure is received is urged by a solenoid (15, 18, 21) in the valve-opening direction, with a differential pressure set to the differential pressure control valve being made variable depending on a value of an electric current (i) supplied to the solenoid.

7. Expansion valve according to claim 1, **characterized in that** the restriction (R) is a refrigerant passage (5) having a fixed flow path cross-sectional area, and
that the differential pressure control valve (9, 10) is configured such that a solenoid (15, 18, 21) is disposed on a side of the differential pressure control valve (9, 10) where the inlet pressure is received, and the differential pressure control valve is urged via the diaphragm (6) in the valve-closing direction by a spring (50) interposed between a fixed core (15) and a movable core (18) of the solenoid, and that a differential pressure set to the differential pressure control valve can be varied by reducing an urging force of the spring (50) depending on a value of an electric current (i) supplied to the solenoid.

8. Expansion valve according to claim 6 or 7, **characterized in that** the differential pressure control valve includes a valve element (9) having a frustoconical or a flat sealing surface.

9. Expansion valve according to claim 1, **characterized in that** the restriction includes a first valve seat (31) disposed in a passage between the refrigerant inlet (1) and the differential pressure control valve (9, 10), a first valve element (32) disposed in a manner opposed to the first valve seat (31) from a side of the differential pressure control valve such that the first valve element can move to and away from the first valve seat, and a first spring (34) for urging the first valve element (32) toward the first valve seat (31) in the valve-closing direction, and that the first valve element (32) is urged by a solenoid (15, 18, 21) in the valve-opening direction, thereby making it possible to vary a flow path cross-sectional area set to the restriction (R) depending on a value of an electric current (i) supplied to the solenoid,
that the differential pressure control valve (90) includes a second valve seat (10) disposed at an intermediate portion of a passage leading from the restriction (R) to a refrigerant outlet (2), a second valve element (9) disposed in a manner opposed to the second valve seat from a side of the refrigerant outlet such that the second valve element can move to and away from the second valve seat, a piston (8) integrally formed with the second valve element (9), and a second spring (35) for urging the second valve element in the valve-opening direction, the diaphragm (6) being provided on an opposite end face of the piston (8) to the second valve element, in abutment with the end face.

10. Expansion valve according to claim 9, **characterized in that** assuming that an effective pressure-receiving area of the first valve element (32) is represented by A, a load set to the first spring (34) is represented by f1, an effective pressure-receiving area of the second valve element (9) is represented by B, and a load set to the second spring (35) is represented by f2, the first valve element, the first spring, the second valve element, and the second spring are set to have a relationship of f1/A > f2/B.

11. Expansion valve according to claim 1, **characterized in that** the restriction (R) includes a first valve seat (31) disposed in a passage between the refrigerant inlet (1) and the differential pressure control valve (9, 10), a first valve element (32) disposed in a manner opposed to the first valve seat from a side of the differential pressure control valve such that the first valve element can move to and away from the first valve seat, and a spring (36) for urging the first valve element toward the first valve seat in the valve-closing direction, and that the first valve element (32) is urged by a solenoid (15, 18, 21) in the valve-opening direction, thereby making it possible to vary a flow path cross-sectional area set to the restriction depending on a value of an electric current (i) supplied to the solenoid, and
that the differential pressure control valve (9, 10) includes a second valve seat (10) disposed at an intermediate portion of a passage leading from the restriction (R) to a refrigerant outlet (2), a second valve element (9) disposed in a manner opposed to the second valve seat from a side of the refrigerant outlet (2) such that the second valve element can move to and away from the second valve seat, and a piston (8) integrally formed with the second valve element (9), the second valve element being urged by the same spring (36) in the valve-opening direction, the diaphragm (6) being provided on an opposite end face of the piston (8) to the second valve element, in abutment with the end face.

12. Expansion valve according to claim 11, **characterized in that** the solenoid (15, 18, 21) includes a second spring (42) disposed in a manner urging a movable core (18) toward a fixed core (15) and the first valve element (32), a load of the spring (36) urging the first valve element (32) and the second valve element (9) being indirectly adjusted by adjusting a load of the second spring (42).

13. Expansion valve according to claim 12, **characterized in that** the load of the second spring (42) is adjusted based on an amount of insertion depth of a press-fit member (41) receiving the second spring (42) on a side opposite to the movable core (18).

14. Expansion valve according to claim 1, **characterized by** an elastic valve element (68) disposed for opening and closing the restriction (R), thereby being capable of completely closing a passage (5) between the inlet (1) and the outlet (2).

15. Expansion valve according to claim 1, **characterized in that** the restriction (R) is formed by a refrigerant passage (5) formed between the refrigerant inlet (1) and the differential pressure control valve (9, 10) and a shaft (17) of a solenoid (15, 18, 21) extending therethrough, the solenoid setting a differential pressure across the differential pressure control valve depending on a value of a supplied electric current (i), and
that the differential pressure control valve includes a valve seat (10) disposed at an intermediate portion of a passage leading from the restriction (R) to a refrigerant outlet (2), a valve element (9) disposed in a manner opposed to the valve seat from a side of the refrigerant outlet (2) such that the valve element can move to and away from the valve seat, a piston (8a) axially movably held in a through hole coaxially formed through the valve element (9), with the shaft (17) in abutment with one end face thereof having an outer diameter larger than an inner diameter of the refrigerant passage (5), the piston (8a) having the valve element (9) and the diaphragm (6) in abutment with the other end face thereof, and a spring (12) for urging the piston (8a) via the diaphragm (6) in a direction in which the valve element (9) is seated on the valve seat (10), the piston (8a) operating in unison with the valve element (9) when the solenoid is in an energized state, whereas when the solenoid is in a de-energized state, the piston (8a) operating even after the valve element (9) has been seated on the valve seat (10), to close the refrigerant passage (5).

16. Expansion valve according to claim 15, **characterized in that** the piston (8a) has an elastic member (68) provided at a portion (67) thereof for closing the refrigerant passage (5), preferably a rubber part.

17. Expansion valve according to claim 15, **characterized in that** the piston (8a) has a stepped portion for catching the valve element (9) to cause the piston (8a) to operate in unison with the valve element (9), after opening the refrigerant passage (5) by receiving an urging force from the solenoid.

18. Expansion valve according to claim 1, **characterized in that** the restriction (R) is a refrigerant passage (5) formed with a fixed flow path cross-sectional area between the refrigerant inlet (1) and the differential pressure control valve (9, 10),
that the differential pressure control valve includes a valve seat (10) disposed at an intermediate portion of a passage leading from a space (4) between the restriction (R) and the differential pressure control valve (9, 10) to a refrigerant outlet (2), and a valve element (9) disposed in a manner opposed to the valve seat from a side of the refrigerant outlet such that the valve element can move to and away from the valve seat, the valve element (9) being urged by a spring (12) via the diaphragm (6) in the valve closing direction from a side of the differential pressure control valve where the inlet pressure is received, and for being urged by a solenoid (15, 18, 21) in the valve-opening direction from a side of the differential pressure control valve where the intermediate pressure is received, the valve element (9) having an extended portion (67) extending through a valve hole to a location close to an outlet of the refrigerant passage (5), the extended portion (67) controlling a flow path cross-sectional area at the outlet of the refrigerant passage (5) according to changes in pressure of the refrigerant inlet (1).

19. Expansion valve according to claim 1, **characterized in that** the valve is provided in a refrigeration cycle using either carbon dioxide or HFC-152a as the refrigerant.

**Patentansprüche**

1. Expansionsventil zum Regeln einer konstanten Strömungsrate, mit einer einen kleineren Strömungspfad-Querschnittsbereich als ein Kältemitteleinlass (1) aufweisenden Drossel (R), und mit einem Differentialdruck-Steuerventil (9, 10) zum Regeln eines konstanten Differentialdrucks über die Drossel, **dadurch gekennzeichnet, dass** eine Stromabseite der Drossel (R) und eine Stromaufseite des Differentialdruck-Steuerventils (9, 10) miteinander kommunizieren, und
dass das Differentialdruck-Steuerventil (9, 10) konfiguriert ist, einen Einlassdruck des Kältemitteleinlasses in Ventilschließrichtung und zur selben Zeit einen Zwischendruck (P2) zwischen der Drossel (R) und dem Differentialdruck-Steuerventil (9, 10) in Ventilöffnungsrichtung aufzunehmen, wobei ein den Einlassdruck aufnehmender Bereich durch eine Membrane (6) fluidisch isoliert ist.

2. Expansionsventil gemäß Anspruch 1, **dadurch ge-**

**kennzeichnet, dass** das Differentialdruck-Steuerventil (9, 10) einen in einem Zwischenabschnitt einer von einem Raum zwischen der Drossel (R) und dem Differentialdruck-Steuerventil zu einem Kältemittelauslass (2) führenden Passage angeordneten Ventilsitz (10) umfasst, dass ein dem Ventilsitz (10) gegenüberliegendes Ventilelement (9) von der Seite des Kältemittelauslasses (2) zu dem Ventilsitz hin und von diesem weg bewegbar ist, dass ein Kolben (8) mit dem Ventilelement (9) integral ausgebildet ist, und dass die Membrane (6) in Anlage an einer dem Ventilelement gegenüberliegenden Endfläche des Kolbens (8) ist.

3. Expansionsventil gemäß Anspruch 2, **dadurch gekennzeichnet, dass** ein innerer Durchmesser des Ventilsitzes (10) und ein effektiver druckaufnehmender Bereich der Membrane (6) dieselbe Größe haben.

4. Expansionsventil gemäß Anspruch 2, **dadurch gekennzeichnet, dass** die Membrane (6) gasdicht zwischen einem Halter (7) und einem Hauptblock (3) sandwichartig eingeschlossen ist, wobei der in den Hauptblock (3) eingepasste Halter (7) den Kolben (8) axial beweglich abstützt.

5. Expansionsventil gemäß Anspruch 1, **dadurch gekennzeichnet, dass** die Membrane (6) durch eine Mehrzahl dünner Filme gebildet wird, die übereinandergelegt sind.

6. Expansionsventil gemäß Anspruch 1, **dadurch gekennzeichnet, dass** die Drossel (R) eine Kältemittelpassage (5) mit einem festgelegten Strömungspfad-Querschnittsbereich ist, und
dass das Differentialdruck-Steuerventil (9, 10) so konfiguriert ist, dass eine den Einlassdruck aufnehmende Seite des Differentialdruck-Steuerventils, über die Membrane (6) in Ventilschließrichtung durch eine Feder (12) beaufschlagt ist, und eine den Zwischendruck aufnehmende Seite des Differentialdruck-Steuerventils durch einen Solenoid (15, 18, 21) in Ventilöffnungsrichtung beaufschlagt wird, wobei ein an dem Differentialdruck-Steuerventil eingestellter Differentialdruck abhängig vom Wert eines dem Solenoid zugeführten elektrischen Stroms (i) variabel gemacht wird.

7. Expansionsventil gemäß Anspruch 1, **dadurch gekennzeichnet, dass** die Drossel (R) eine Kältemittelpassage (5) mit einem festgelegten Strömungspfad-Querschnittsbereich ist, und
dass das Differentialdruck-Steuerventil (9, 10) so konfiguriert ist, dass ein Solenoid (15, 18, 21) an einer Seite des Differentialdruck-Steuerventils (9, 10) angeordnet ist, wo der Einlassdruck aufgenommen wird, und das Differentialdruck-Steuerventil über die Membrane (6) durch eine Feder (50) in Ventilschließrichtung beaufschlagt wird, welche Feder zwischen einem fixierten Kern (15) und einem beweglichen Kern (18) des Solenoid zwischengeschaltet ist, und dass ein an dem Differentialdruck-Steuerventil eingestellter Differentialdruck durch Reduzieren einer Beaufschlagungskraft der Feder (50) abhängig vom Wert eines dem Solenoid zugeführten elektrischen Stroms (i) variiert werden kann.

8. Expansionsventil gemäß Anspruch 6 oder 7, **dadurch gekennzeichnet, dass** das Differentialdruck-Steuerventil ein Ventilelement (9) inkludiert, das eine kegelstumpfförmige oder flache Dichtungsfläche hat.

9. Expansionsventil gemäß Anspruch 1, **dadurch gekennzeichnet, dass** die Drossel einen ersten Ventilsitz (31) in einer Passage zwischen dem Kältemitteleinlass (1) und dem Differentialdruck-Steuerventil (9, 10), ein erstes Ventilelement (32), das gegenüberliegend zu dem ersten Ventilsitz (31) von einer Seite des Differentialdruck-Steuerventils derart angeordnet ist, dass das erste Ventilelement zu dem ersten Ventilsitz hin und von diesem weg bewegbar ist, und eine erste Feder (34) zum Beaufschlagen des ersten Ventilelementes (32) zu dem ersten Ventilsitz (31) in Ventilschließrichtung aufweist, und dass das erste Ventilelement (32) durch einen Solenoid (15, 18, 21) in Ventilöffnungsrichtung beaufschlagt ist, um den an der Drossel (R) eingestellten Strömungspfad-Querschnittsbereich abhängig vom Wert des dem Solenoid zugeführten elektrischen Stroms (i) zu variieren, dass das Differentialdruck-Steuerventil (90) einen zweiten Ventilsitz (10) aufweist, der in einem Zwischenabschnitt einer Passage angeordnet ist, welche von der Drossel (R) zu einem Kältemittelauslass (2) führt, ein zweites Ventilelement (9), das gegenüberliegend zu dem zweiten Ventilsitz von einer Seite des Kältemittelauslasses so angeordnet ist, dass das zweite Ventilelement zu dem zweiten Ventilsitz hin und von diesem weg bewegbar ist, einen integral mit dem zweiten Ventilelement (9) ausgebildeten Kolben (8), und eine zweite Feder (35) zum Beaufschlagen des zweiten Ventilelementes in Ventilöffnungsrichtung, wobei die Membrane (6) an einer dem zweiten Ventilelement gegenüberliegenden Endfläche des Kolbens (8) in Anlage mit der Endfläche vorgesehen ist.

10. Expansionsventil gemäß Anspruch 9, **dadurch gekennzeichnet, dass** unter der Annahme, dass ein effektiver druckaufnehmender Bereich des ersten Ventilelementes (32) durch (A) repräsentiert ist, eine an der ersten Feder (34) eingestellte Last durch (f1) repräsentiert ist, ein effektiver druckaufnehmender Bereich des zweiten Ventilelements (9) durch (B) repräsentiert ist, und eine an der zweiten Feder (35) eingestellte Last durch (f2) repräsentiert ist, das erste Ventilelement, die erste Feder, das zweite Ventilelement, und die zweite Feder so eingestellt sind, dass sie ein Verhältnis von (f1/A > f2/B) bilden.

11. Expansionsventil gemäß Anspruch 1, **dadurch gekennzeichnet, dass** die Drossel (R) einen ersten Ventilsitz (31) in einer Passage zwischen dem Kältemitteleinlass (1) und dem Differentialdruck-Steuerventil (9, 10), ein erstes Ventilelement (32) gegenüberliegend zu dem ersten Ventilsitz von einer Seite des Differentialdruck-Steuerventils, derart, dass das erste Ventilelement zu dem ersten Ventilsitz hin- und von diesem wegbewegbar ist, und eine Feder (36) zum Beaufschlagen des ersten Ventilelementes in Ventilschließrichtung zu dem ersten Ventilsitz aufweist, und dass das erste Ventilelement (32) durch einen Solenoid (15, 18, 21) in Ventilöffnungsrichtung beaufschlagbar ist, um es **dadurch** zu ermöglichen, den an der Drossel gesetzten Strömungspfad-Querschnittsbereich abhängig von einem Wert eines dem Solenoid zugeführten elektrischen Stroms (i) zu variieren, und dass das Differentialdruck-Steuerventil (9, 10) einen zweiten Ventilsitz (10) in einem Zwischenabschnitt einer Passage aufweist, welche von der Drossel (R) zu einem Kältemittelauslass (2) führt, ein zweites Ventilelement (9), das gegenüberliegend zu dem zweiten Ventilsitz von einer Seite des Kältemittelauslasses (2) so angeordnet ist, dass das zweite Ventilelement zu dem zweiten Ventilsitz hin und von diesem weg bewegbar ist, dass ein Kolben (8) mit dem zweiten Ventilelement (9) integral ausgebildet ist, wobei das zweite Ventilelement durch dieselbe Feder (36) in Ventilöffnungsrichtung beaufschlagt wird und die Membrane (6) an einer dem zweiten Ventilelement gegenüberliegenden Endfläche des Kolbens (8) in Anlage an der Endfläche vorgesehen ist.

12. Expansionsventil gemäß Anspruch 11, **dadurch gekennzeichnet, dass** der Solenoid (15, 18, 21) eine zweite Feder (42) enthält, die so angeordnet ist, dass sie einen beweglichen Kern (18) zu einem fixierten Kern (15) und dem ersten Ventilelement (32) beaufschlagt, wobei eine Last der Feder (36), die das erste Ventilelement (32) und das zweite Ventilelement (9) beaufschlagt, durch Einstellen einer Last der zweiten Feder (42) indirekt eingestellt wird.

13. Expansionsventil gemäß Anspruch 12, **dadurch gekennzeichnet, dass** die Last der zweiten Feder (42) basierend auf dem Ausmaß einer Einsetztiefe eines durch Einpressen eingepassten Gliedes (41) eingestellt wird, welches Glied (41) die zweite Feder (42) an einer dem beweglichen Kern (18) gegenüberliegenden Seite aufnimmt.

**14.** Expansionsventil gemäß Anspruch 1, **gekennzeichnet durch** ein zum Öffnen und Schließen der Drossel (R) vorgesehenes elastisches Ventilelement (68), mit dem eine Passage (5) zwischen dem Einlass (1) und dem Auslass (2) vollständig verschließbar ist.

**15.** Expansionsventil gemäß Anspruch 1, **dadurch gekennzeichnet, dass** die Drossel (R) durch eine Kältemittelpassage (5) gebildet wird, welche sich zwischen dem Kältemitteleinlass (1) und dem Differentialdruck-Steuerventil (9, 10) erstreckt, dass sich ein Schaft (17) eines Solenoid (15, 18, 21) durch die Drossel (R) erstreckt, und der Solenoid einen Differentialdruck über das Differentialdruck-Steuerventil abhängig von einem Wert eines zugeführten elektrischen Stroms (i) einstellt, und

dass das Differentialdruck-Steuerventil einen in einem Zwischenabschnitt einer Passage angeordneten Ventilsitz (10) aufweist, die von der Drossel (R) zu einem Kältemittelauslass (2) führt, ein Ventilelement (9), das gegenüberliegend zu dem Ventilsitz von einer Seite des Kältemittelauslasses (2) so angeordnet ist, dass das Ventilelement zu dem Ventilsitz hin und von diesem weg bewegbar ist, einen Kolben (8a), der in einer Durchgangsbohrung axial beweglich gehalten ist, welche sich koaxial durch das Ventilelement (9) erstreckt, der Schaft (17) in Anlage an einer Endfläche des Kolbens (8a) ist, die einen größeren Außendurchmesser hat als ein Innendurchmesser der Kältemittepassage (5), wobei an an der anderen Endfläche des Kolbens (8a) das Ventilelement (9) und die Membrane (6) anliegen und eine Feder (12) den Kolben (8a) über die Membrane (6) in einer Richtung beaufschlagt, in welcher das Ventilelement (9) auf den Ventilsitz (10) aufgesetzt wird, wobei der Kolben (8a) gemeinsam mit dem Ventilelement (9) operiert, wenn der Solenoid in erregtem Zustand ist, wohingegen bei entregtem Solenoid der Kolben (8a) weiterhin operiert, auch dann, wenn das Ventilelement (9) auf den Ventilsitz (10) aufgesetzt hat, um die Kältemittelpassage (5) zu verschließen.

**16.** Expansionsventil gemäß Anspruch 15, **dadurch gekennzeichnet, dass** an einem Abschnitt (67) des Kolbens (8a) zum Schließen der Kältemittelpassage (5) ein elastisches Glied (68) vorgesehen ist, vorzugsweise, ein Gummiteil.

**17.** Expansionsventil gemäß Anspruch 15, **dadurch gekennzeichnet, dass** der Kolben (8a) einen abgestuften Abschnitt zum Fangen durch das Ventilelement (9) aufweist, um zu bewirken, dass der Kolben (8a) gemeinsam mit dem Ventilelement (9) operiert, nachdem unter Aufnahme einer Beaufschlagungskraft von dem Solenoid die Kältemittelpassage (5) geöffnet ist.

**18.** Expansionsventil gemäß Anspruch 1, **dadurch gekennzeichnet, dass** die Drossel (R) eine Kältemittelpassage (5) ist, die zwischen dem Kältemitteleinlass (1) und dem Differentialdruck-Steuerventil (9, 10) mit einem festgelegten Strömungspfad-Querschnittsbereich ausgebildet ist,

dass das Differentialdruck-Steuerventil einen Ventilsitz (10) aufweist, der in einem Zwischenabschnitt einer Passage angeordnet ist, welche von einem Raum (4) zwischen der Drossel (R) und dem Differentialdruck-Steuerventil (9, 10) zu einem Kältemittelauslass (2) führt, und ein Ventilelement (9) von einer Seite des Kältemittelauslasses gegenüberliegend zu dem Ventilsitz so angeordnet ist, dass das Ventilelement zu dem Ventilsitz hin und von diesem weg bewegbar ist, wobei das Ventilelement (9) durch eine Feder (12) über die Membrane (6) in Ventilschließrichtung von einer Seite des Differentialdruck-Steuerventils beaufschlagbar ist, wo der Einlassdruck aufgenommen wird, und durch einen Solenoid (15, 18, 21) in der Ventilöffnungsrichtung von einer Seite des Differentialdruck-Steuerventils beaufschlagbar ist, wo der Zwischendruck aufgenommen wird, wobei das Ventilelement (9) einen sich durch eine Ventilöffnung bis zu einer Stelle nahe bei einem Auslass der Kältemittelpassage (5) erstreckenden, verlängerten Abschnitt (67) hat, der einen Strömungspfad-Querschnittsbereich an dem Auslass der Kältemittelpassage (5) entsprechend Änderungen des Drucks im Kältemitteleinlass regelt.

**19.** Expansionsventil gemäß Anspruch 1, **dadurch gekennzeichnet, dass** das Ventil in einem Kühlkreis angeordnet ist, der entweder Kohlendioxid oder HFC-152a als Kältemittel verwendet.

## Revendications

**1.** Vanne de détente pour contrôler un débit constant comprenant une restriction (R) ayant une section de passage d'écoulement inférieure à celle d'une entrée de réfrigérant (1), et une vanne de commande de pression différentielle (9, 10) pour fournir une commande de sorte qu'une pression différentielle à travers la restriction est constante,

**caractérisée en ce qu'**un côté aval de la restriction (R) et un côté amont de la vanne de commande de pression différentielle (9, 10) communiquent entre eux, et

**en ce que** la vanne de commande de pression différentielle (9, 10) est configurée pour recevoir une pression d'entrée (1) de l'entrée de réfrigérant dans une direction de fermeture de vanne et recevoir en même temps une pression intermédiaire (P2) entre la restriction (R) et la vanne de commande de pression différentielle (9, 10) dans une direction d'ouverture de vanne, avec une partie de réception de pression pour recevoir la pression d'entrée qui est isolée de manière fluidique par un diaphragme (6).

2.  Vanne de détente selon la revendication 1, **caractérisée en ce que** la vanne de commande de pression différentielle (9, 10) comprend un siège de vanne (10) disposé au niveau d'une partie intermédiaire d'un passage allant d'un espace entre la restriction (R) et la vanne de commande de pression différentielle jusqu'à une sortie de réfrigérant (2), un élément de vanne (9) étant disposé de manière opposée au siège de vanne (10) d'un côté de la sortie de réfrigérant (2) de sorte que l'élément de vanne peut se déplacer vers et à distance du siège de vanne, et un piston (8) formé de manière solidaire avec l'élément de vanne (9), et de sorte que le diaphragme (6) est prévu sur une face d'extrémité opposée du piston (8) par rapport à l'élément de vanne (9), en butée avec la face d'extrémité.

3.  Vanne de détente selon la revendication 2, **caractérisée en ce qu'**un diamètre interne du siège de vanne (10) et une surface de réception de pression effective du diaphragme (6) ont la même taille.

4.  Vanne de détente selon la revendication 2, **caractérisée en ce que** le diaphragme (6) est pris en sandwich d'une manière étanche au gaz entre un moyen de maintien (7) supportant de manière axialement mobile le piston (8), et un bloc principal (3) ayant le moyen de maintien monté dans celui-ci.

5.  Vanne de détente selon la revendication 1, **caractérisée en ce que** le diaphragme (6) est formé par une pluralité de films fins superposés les uns sur les autres.

6.  Vanne de détente selon la revendication 1, **caractérisée en ce que** la restriction (R) est un passage de réfrigérant (5) ayant une section de passage d'écoulement fixe, et
    **en ce que** la vanne de commande de pression différentielle (9, 10) est configurée de sorte qu'un côté de la vanne de commande de pression différentielle où la pression d'entrée est reçue, est poussé par un ressort (12) via le diaphragme (6) dans la direction de fermeture de vanne, et un côté de la vanne de commande de pression différentielle où la pression intermédiaire est reçue, est poussé par un solénoïde (15, 18, 21) dans la direction d'ouverture de vanne, avec une pression différentielle réglée sur la vanne de commande de pression différentielle qui est variable en fonction d'une valeur d'un courant électrique (i) appliqué sur le solénoïde.

7.  Vanne de détente selon la revendication 1, **caractérisée en ce que** la restriction (R) est un passage de réfrigérant (5) ayant une section de passage d'écoulement fixe, et **en ce que** la vanne de commande de pression différentielle (9, 10) est configurée de sorte qu'un solénoïde (15, 18, 21) est disposé sur un côté de la vanne de commande de pression différentielle (9, 10) où la pression d'entrée est reçue, et la vanne de commande de pression différentielle est poussée via le diaphragme (6) dans la direction de fermeture de vanne par un ressort (50) interposé entre un noyau fixe (15) et un noyau mobile (18) du solénoïde, et **en ce qu'**une pression différentielle réglée sur la vanne de commande de pression différentielle peut être modifiée en réduisant une force de poussée du ressort (50) en fonction d'une valeur d'un courant électrique (i) alimenté au solénoïde.

8.  Vanne de détente selon la revendication 6 ou 7, **caractérisée en ce que** la vanne de commande de pression différentielle comprend un élément de vanne (9) ayant une surface d'étanchéité tronconique ou plate.

9.  Vanne de détente selon la revendication 1, **caractérisée en ce que** la restriction comprend un premier siège de vanne (31) disposé dans un passage entre l'entrée de réfrigérant (1) et la vanne de commande de pression différentielle (9, 10), un premier élément de vanne (32) étant disposé d'une manière opposée au premier siège de vanne (31) d'un côté de la vanne de commande de pression différentielle de sorte que le premier élément de vanne peut se déplacer vers et à distance du premier siège de vanne, et un premier ressort (34) pour pousser le premier élément de vanne (32) vers le premier siège de vanne (31) dans une direction de fermeture de vanne, et **en ce que** le premier élément de vanne (32) est poussé par un solénoïde (15, 18, 21) dans la direction d'ouverture de vanne, permettant ainsi de modifier une section de passage d'écoulement réglée sur la restriction (R) en fonction d'une valeur d'un courant électrique (i) appliqué sur le solénoïde,
    **en ce que** la vanne de commande de pression différentielle (90) comprend un second siège de vanne (10) disposé au niveau d'une partie intermédiaire d'un passage allant de la restriction (R) jusqu'à une sortie de réfrigérant (2), un second élément de vanne (9) disposé d'une manière opposée au second siège de vanne d'un côté de la sortie de réfrigérant de sorte que le second élément de vanne peut de déplacer vers et à distance du second siège de vanne, un piston (8) étant formé de manière solidaire avec le second élément de vanne (9), et un second ressort (35) pour pousser le second élément de vanne dans la direction d'ouverture de vanne, le diaphragme (6) étant prévu sur une face d'extrémité opposée du piston (8) par rapport au second élément de vanne, en butée avec la face d'extrémité.

10. Vanne de détente selon la revendication 9, **carac-**

térisée en ce qu'en supposant qu'une surface de réception de pression effective du premier élément de vanne (32) est représentée par A, qu'une charge réglée sur le premier ressort (34) est représentée par f1, qu'une surface de réception de pression effective du second élément de vanne (9) est représentée par B, et qu'une charge placée sur le second ressort (35) est représentée par f2, le premier élément de vanne, le premier ressort, le second élément de vanne et le second ressort sont réglés pour avoir une relation de :

$$f1/A > f2/B$$

11. Vanne de détente selon la revendication 1, **caractérisée en ce que** la restriction (R) comprend un premier siège de vanne (31) disposé dans un passage entre l'entrée de réfrigérant (1) et la vanne de commande de pression différentielle (9, 10), un premier élément de vanne (32) disposé d'une manière opposée au premier siège de vanne d'un côté de la vanne de commande de pression différentielle de sorte que le premier élément de vanne peut se déplacer vers et à distance du premier siège de vanne, et un ressort (36) pour pousser le premier élément de vanne vers le premier siège de vanne dans la direction de fermeture de vanne, et **en ce que** le premier élément de vanne (32) est poussé par un solénoïde (15, 18, 21) dans une direction d'ouverture de vanne, permettant ainsi de modifier une section de passage d'écoulement réglée sur la restriction en fonction d'une valeur d'un courant électrique (i) appliqué sur le solénoïde, et

de sorte que la vanne de commande de pression différentielle (9, 10) comprend un second siège de vanne (10) disposé au niveau d'une partie intermédiaire d'un passage allant de la restriction (R) jusqu'à une sortie de réfrigérant (2), un second élément de vanne (9) disposé d'une manière opposée au second siège de vanne d'un côté de la sortie de réfrigérant (2) de sorte que le second élément de vanne peut se déplacer vers et à distance du second siège de vanne, et un piston (8) formé de manière solidaire avec le second élément de vanne (9), le second élément de vanne étant poussé par le même ressort (36) dans la direction d'ouverture de vanne, le diaphragme (6) étant prévu sur une face d'extrémité opposée du piston (8) par rapport au second élément de vanne, en butée avec la face d'extrémité.

12. Vanne de détente selon la revendication 11, **caractérisée en ce que** le solénoïde (15, 18, 21) comprend un second ressort (42) disposé d'une manière qui pousse un noyau mobile (18) vers un noyau fixe (15) et le premier élément de vanne (32), une charge du ressort (36) poussant le premier élément de vanne (32) et le second élément de vanne (9) qui est ajusté de manière indirecte en réglant une charge du second ressort (42).

13. Vanne de détente selon la revendication 12, **caractérisée en ce que** la charge du second ressort (42) est ajustée en fonction d'une quantité de profondeur d'insertion d'un élément monté par pressage (41) recevant le second ressort (42) sur un côté opposé au noyau mobile (18).

14. Vanne de détente selon la revendication 1, **caractérisée par** un élément de vanne élastique (68) disposé pour ouvrir et fermer la restriction (R), étant ainsi capable de fermer complètement un passage (5) entre l'entrée (1) et la sortie (2).

15. Vanne de détente selon la revendication 1, **caractérisée en ce que** la restriction (R) est formée par un passage de réfrigérant (5) formé entre l'entrée de réfrigérant (1) et la vanne de commande de pression différentielle (9, 10) et un arbre (17) d'un solénoïde (15, 18, 21) s'étendant à travers celle-ci, le solénoïde réglant une pression différentielle à travers la vanne de commande de pression différentielle en fonction d'une valeur d'un courant électrique (i) alimenté, et **en ce que** la vanne de commande de pression différentielle comprend un siège de vanne (10) disposé au niveau d'une partie intermédiaire d'un passage allant de la restriction (R) jusqu'à une sortie de réfrigérant (2), un élément de vanne (9) disposé d'une manière opposée au siège de vanne d'un côté de la sortie de réfrigérant (2), de sorte que l'élément de vanne peut être déplacé vers et à distance du siège de vanne, un piston (8a) étant maintenu de manière axialement mobile dans un trou débouchant formé de manière coaxiale à travers l'élément de vanne (9), avec l'arbre (17) en butée avec sa face d'extrémité ayant un diamètre externe supérieur à un diamètre interne du passage de réfrigérant (5), le piston (8a) ayant l'élément de vanne (9) et le diaphragme (6) en butée avec son autre face d'extrémité, et un ressort (12) pour pousser le piston (8a) via le diaphragme (6) dans une direction dans laquelle l'élément de vanne (9) est installé sur le siège de vanne (10), le piston (8a) fonctionnant à l'unisson avec l'élément de vanne (9) lorsque le solénoïde est dans un état excité, alors que lorsque le solénoïde est dans un état non excité, le piston (8a) fonctionnant même après que l'élément de vanne (9) a été installé sur le siège de vanne (10), pour fermer le passage de réfrigérant (5).

16. Vanne de détente selon la revendication 15, **caractérisée en ce que** le piston (8a) a un élément élastique (68) prévu au niveau de sa partie (67) pour fermer le passage de réfrigérant (5), de préférence une pièce en caoutchouc.

**17.** Vanne de détente selon la revendication 15, **caractérisée en ce que** le piston (8a) a une partie étagée pour attraper l'élément de vanne (9) afin d'amener le piston (8a) à fonctionner à l'unisson avec l'élément de vanne (9), après l'ouverture du passage de réfrigérant (5) pour recevoir une force de poussée provenant du solénoïde.

**18.** Vanne de détente selon la revendication 1, **caractérisée en ce que** la restriction (R) est un passage de réfrigérant (5) formé avec une section de passage d'écoulement fixe entre l'entrée de réfrigérant (1) et la vanne de commande de pression différentielle (9, 10),

**en ce que** la vanne de commande de pression différentielle comprend un siège de vanne (10) disposé au niveau d'une partie intermédiaire d'un passage allant d'un espace (4) entre la restriction (R) et la vanne de commande de pression différentielle (9, 10) jusqu'à une sortie de réfrigérant (2), et un élément de vanne (9) disposé d'une manière opposée au siège de vanne d'un côté de la sortie de réfrigérant de sorte que l'élément de vanne peut se déplacer vers et à distance du siège de vanne, l'élément de vanne (9) étant poussé par un ressort (12) via le diaphragme (6) dans la direction de fermeture de vanne à partir d'un côté de la vanne de commande de pression différentielle où la pression d'entrée est reçue, et pour être poussé par un solénoïde (15, 18, 21) dans la direction d'ouverture de vanne à partir d'un côté de la vanne de commande de pression différentielle où la pression intermédiaire est reçue, l'élément de vanne (9) ayant une partie étendue (67) s'étendant à travers un trou de vanne jusqu'à un emplacement à proximité d'une sortie du passage de réfrigérant (5), la partie étendue (67) contrôlant une section de passage d'écoulement au niveau de la sortie du passage de réfrigérant (5) selon les changements de pression de l'entrée de réfrigérant (1) .

**19.** Vanne de détente selon la revendication 1, **caractérisée en ce que** la vanne est prévue dans un cycle de réfrigération en utilisant du dioxyde de carbone ou du HFC-152a en tant que réfrigérant.

FIG. 1

FIG. 2

FIG. 3

FIG. 4

FIG. 5

FIG. 6

FIG. 7

FIG. 8

FIG. 9

FIG. 10

FIG. 11